# EUROPÄISCHE PATENTSCHRIFT

(11) **EP 3 452 356 B1**
(45) Veröffentlichungstag und Bekanntmachung des Hinweises auf die Patenterteilung: **20.05.2020**
(21) Anmeldenummer: 17734664.0
(22) Anmeldetag: 20.06.2017
(51) Int. Cl.: B61D 35/00, B60R 15/00, B61D 19/02

(54) **KABINE MIT DREHTÜR**
CABIN HAVING A REVOLVING DOOR
CABINE À PORTE PIVOTANTE

(30) Priorität: 07.07.2016 DE 102016212380
(43) Veröffentlichungstag der Anmeldung: 13.03.2019
(73) Patentinhaber: Siemens Mobility GmbH, 81739 München (DE)
(72) Erfinder: HÄUSSLER, Andreas, 42659 Solingen (DE)
(86) Internationale Anmeldenummer: PCT/EP2017/065012
(87) Internationale Veröffentlichungsnummer: WO 2018/007141

(56) Entgegenhaltungen:
- EP-A2- 2 230 174
- CN-U- 202 966 330
- CN-U- 204 728 882
- US-A1- 2009 217 593

## Beschreibung

Die vorliegende Erfindung betrifft eine Kabine mit Drehtür für ein Fahrzeug.

Die Konstruktion von Kabinen wie beispielsweise Nasszellen in Fahrzeugen, insbesondere in Schienenfahrzeugen, ist durch ein eingeschränktes Platzangebot herausgefordert. Insbesondere wird durch die schließende Drehtür, die Kanten des Waschtisches und des WC-Sitzes der verbleibende freie Raum innerhalb der Kabine z. B. zur Drehung des Fahrgasts um die eigene Körperachse eingeschränkt.

Typischerweise wurde bisher der eingeschränkte Wendekreis mit einer optimierten Anordnung aus Dreh- oder Schiebetür, dem Waschtisch und des WC-Sitzes gelöst. Eine Schiebetür ist in Bezug auf Größe des Wendekreises innerhalb der Kabine im Vorteil, da sie diesen während der platzüberstreichenden Schließbewegung nicht einschränkt. Nachteilig werden aber durch ihren Einsatz die Kabinen länger, um das Türblatt im geöffneten Zustand aufnehmen zu können. Drehtüren, die mit voller Türblattbreite in den Gang aufschlagen, sind ebenfalls unerwünscht, da sie den Bewegungsraum im Gang einschränken und es so zu unerwünschten Kollisionen kommen kann.

Die Offenlegungsschrift US 2010 / 0 237 193 A1 offenbart einen platzsparenden Türöffnungsmechanismus für eine Nasszelle eines Flugzeugs. Insbesondere beschreibt dieses Dokument eine Kabine mit Drehtür für ein Fahrzeug umfassend eine Kabinenwand mit einer Kabinenöffnung und eine Drehtür mit einem Türblatt, das zwischen einem geschlossenen Zustand und einem geöffneten Zustand schwenkbar ist.

Die Veröffentlichung "Laufschienenloses Garagentor" von G. Dittrich in IGM-Getriebesammlung, Nr. 603, 2000, Institut für Getriebetechnik und Maschinendynamik der RWTH Aachen lehrt ein sechsgliedriges Kurbelgetriebe zur Anwendung bei nach oben öffnenden Garagentoren, einhergehend mit einer Erhöhung des nutzbaren Volumens der Garage.

Die Aufgabe besteht somit darin, eine Kabine mit einer Drehtür zu entwerfen, die den Wendekreis innerhalb der Kabine möglichst groß lässt und dabei nur in geringem Maße den Gang beim Öffnen blockiert.

Die Erfindung wird durch die technischen Merkmale des Anspruchs 1 definiert. Erfindungsgemäß wird eine Kabine mit Drehtür für ein Fahrzeug zur Verfügung gestellt, welche eine Kabinenwand mit einer Kabinenöffnung aufweist. Die Kabine weist ferner eine Drehtür mit einem Türblatt auf, das zwischen einem geschlossenen Zustand und einem geöffneten Zustand schwenkbar ist. Erfindungsgemäß wird ein sechsgliedriges Kurbelgetriebe zur Verfügung gestellt, das mit dem Türblatt und der Kabine verbunden ist und das das Türblatt auf einer gekrümmten Führungsbahn zwischen dem geöffneten und dem geschlossen Zustand unter Krafteinwirkung führt, wobei im geschlossenen Zustand das Türblatt die Kabinenöffnung abdeckt.

Eine solche Kabine hat den Vorteil, dass durch Wahl oder Konstruktion eines geeigneten, sechsgliedrigen Kurbelgetriebes zur Führung des Türblatts Führungsbahnen nach den jeweiligen Anforderungen an beispielsweise vergrößerten Wendekreis bzw. geringe auskragende Führungsbahn optimiert werden können. Diese Bahnen können über Getriebesynthese weiter verbessert werden.

Das Kurbelgetriebe ist sechsgliedrig. Solche Kurbelgetriebe ermöglichen die Realisierung einer Vielzahl von Führungsbahnen zur Optimierung. Ein Kurbelgetriebe wird auch als Koppelgetriebe bezeichnet.

Das Kurbelgetriebe ist bevorzugt ein Watt-1-Kurbelgetriebe, wobei ein Koppelglied des Watt-1-Kurbelgetriebes durch das Türblatt dargestellt wird. Mit einem solchen speziellen Watt-1-Kurbelgetriebe lässt sich eine Führungsbahn realisieren, die nur einen geringen auskragenden Bogen von etwa nur der Hälfte des Türblattdurchmessers aufweist. Das Türblatt steht auch vorteilhaft im geöffneten Zustand innerhalb der Kabine und versperrt den Gang nicht. Ferner lässt sich bei geeigneter Positionierung der Drehtür mit speziellem Watt-1-Kurbelgetriebe der Wendekreis für Fahrgäste innerhalb der Kabine vorteilhaft erhöhen, wodurch der Nutzerkomfort für den Fahrgast steigt.

Das Türblatt kann am unteren Ende an einem Führungspunkt geführt werden. Dadurch wird die Stabilität der Drehtür beim Öffnen bzw. Schließen erhöht.

Das Kurbelgetriebe und die zugehörigen Getriebeglieder sind vorteilhaft in einem Deckenbereich untergebracht. Dadurch wird eine Behinderung des Ganges bzw. der Benutzung der Drehtür durch herauskragende Getriebeglieder verringert.

Die Kabinenöffnung der Kabinenwand befindet sich bevorzugt an einem Übergang von der Kabinenwand zu einer der Kabinenwand zugeordneten Seitenwand, wobei das Kurbelgetriebe mit dem Türblatt derart eingerichtet ist, dass die Drehbewegung des Türblatts in Richtung der Seitenwand erfolgt. Durch die Positionierung findet die Öffnungsbewegung mit minimalem Abstand zur Seitenwand statt. Dadurch kann die Bewegungsfreiheit für einen Fahrgast innerhalb der Kabine weiter erhöht werden.

Im geöffneten Zustand liegt bevorzugt ein Quetschschutz zwischen Türblatt und Seitenwand vor. Dies kann dadurch erzielt werden, dass im geöffneten Zustand die Position des Türblatts von der Seitenwand absteht und somit einen Abstand zwischen Türblatt und Seitenwand entsteht. Ein manuelles Öffnen der Drehtür hat somit ein beispielsweise geringeres Verletzungsrisiko bzw. Quetschrisiko der Hand zur Folge.

Weiterhin wird eine Kabinenanordnung mit zwei gegenüberliegenden Kabinen gemäß einer der obigen Ausführungen vorgeschlagen, wobei die Kabinenöffnungen durch einen zwischen den Kabinen befindlichen Gang voneinander getrennt sind. Durch die vorteilhafte geringe auskragende Bewegung in den Gang beim Öffnen bzw. Schließen der Drehtür können auch bei vorgegebener geringer zur Verfügung stehender Gangbreite demnach gegenüberliegende Kabinenanordnungen, auch häufig als Vis-à-Vis-Kabinenanordnungen bezeichnet, für Fahrzeuge, insbesondere für Schienenfahrzeuge, verwendet werden.

Dabei kann die Gangbreite bevorzugt größer oder gleich der Türblattbreite des Türblatts sein. Da beispielsweise bei Watt-1-Kurbelgetrieben die auskragende Bewegung der Drehtür beim Öffnen bzw. Schließen ungefähr nur die Hälfte der Türblattbreite ausmacht, wäre somit die Gangbreite genügend groß, um ein zeitlich simultanes Öffnen bzw. Schließen zu gewährleisten.

Ferner wird ein Fahrzeug umfassend mindestens eine Kabine nach den obigen Ausführungen und/oder mindestens eine Kabinenanordnung gemäß einem der obigen Ausführungen vorgeschlagen.

Das Fahrzeug ist bevorzugt ein motorbetriebenes Fahrzeug, besonders bevorzugt ein Schienenfahrzeug. Insbesondere bei Schienenfahrzeugen können entsprechende Kabinentüren, z. B. für den Sanitärbereich vorgesehen sein. Das Fahrzeug umfasst auch andere Verkehrsmittel, wie zum Beispiel Busse, Schiffe und Flugzeuge. Auch dort können Kabinen, z. B. Sanitärbereiche, mittels der erfindungsgemäßen Drehtür verschlossen werden.

Die erfindungsgemäße Drehtür kann sowohl manuell als auch automatisch betrieben werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: eine erfindungsgemäße Kabine mit einem ausgeführten speziellen Watt-1-Kurbelgetriebe,
- Figur 2: eine erfindungsgemäße Kabine,
- Figur 3: eine Kabine mit einer Drehtür des Standes der Technik,
- Figur 4: eine erfindungsgemäße Kabine,
- Figur 5: eine Kabine mit einer Drehtür des Standes der Technik,
- Figur 6: eine erfindungsgemäße Kabine in Seitenansicht,
- Figur 7: eine erfindungsgemäße Kabinenanordnung, und
- Figur 8: ein erfindungsgemäßes Fahrzeug.

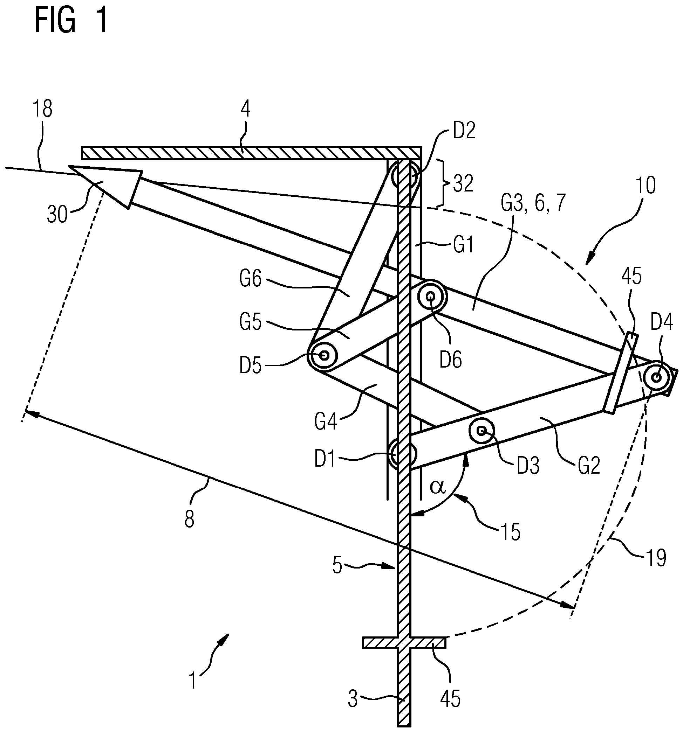

In der Figur 1 wird eine erfindungsgemäße Kabine 1 mit einer Drehtür 6 in Draufsicht gezeigt. Die Kabine umfasst eine Kabinenwand 3, die eine Kabinenöffnung 5 aufweist, wobei diese nur angedeutet ist. Die Kabine 1 umfasst ferner eine Drehtür 6 mit einem Türblatt 7, die zwischen einem geöffneten und einem geschlossenen Zustand schwenkbar ist. Ferner wird ein Kurbelgetriebe 10 zur Verfügung gestellt, das mit dem Türblatt 7 und der Kabine 1 verbunden ist und das das Türblatt 7 auf einer gekrümmten Führungsbahn 18, 19 zwischen dem geöffneten und dem geschlossen Zustand unter Krafteinwirkung führt. Im geschlossenen Zustand deckt das Türblatt 7 die Kabinenöffnung 5 ab.

Das ausgeführte Kurbelgetriebe 10 ist dabei beispielhaft sechsgliedrig ausgeführt und ist ein ebenes Kurbelgetriebe 10. Ein Kurbelgetriebe 10 wird auch als Koppelgetriebe bezeichnet. Es stellt im Besonderen ein spezielles Watt-1-Kurbelgetriebe dar, das im Weiteren näher beschrieben wird. Es sei angemerkt, dass auch andere Kurbelgetriebe 10 zum Einsatz kommen können. Die Erfindung ist somit nicht auf das im Folgenden beschriebene Kurbelgetriebe 10 beschränkt.

Die sechs Getriebeglieder G1, G2, G3, G4, G5, G6 sind dabei über sechs Gelenke D1, D2, D3, D4, D5, D6 miteinander verknüpft. Die Getriebeglieder haben jeweils eine feste Länge. Fest bzw. immobil mit der Kabine 1 gelagert ist das Gestell G1, das als Bezugsglied fungiert. Im geschlossenen Zustand der Drehtür 6 fällt die Richtung des Gestells G1 mit der Richtung des Türblatts 7 überein. Das Gestell G1 ist zusätzlich senkrecht zu einer Seitenwand 4 orientiert, wobei die Erfindung nicht darauf beschränkt ist.

Das Gestell G1 umfasst zwei Drehgelenke, ein Antriebsdrehgelenk D1 und ein weiteres Drehgelenk D2. Das Drehgelenk D2 befindet sich dabei auf der zu einer Seitenwand 4 zugewandten Seite, wobei das Antriebsdrehgelenk D1 sich auf einer zu der Seitenwand 4 abgewandten Seite befindet. Entsprechend bleiben auch die Positionen dieser beiden Drehgelenke D1, D2 während der Bewegung des Getriebes fest bzw. immobil.

Über das Drehgelenk D1 mit dem Gestell G1 drehbar verbunden ist das Getriebeglied G2, das als Antriebsglied fungiert. An dessen Ende, das nicht mit dem Gestell G1 verbunden ist, befindet sich ein Drehgelenk D4, an dem das Koppelglied G3 drehbar verbunden ist. Das Koppelglied G3 ist mit der Drehtür 6 bzw. mit dem Türblatt 7 derart verbunden, dass die Bewegung und Ausrichtung des Koppelglieds G3 der Bewegung und Ausrichtung der Drehtür 6 in der Draufsicht entspricht. In diesem konkreten Beispiel ist die Länge des Koppelglieds G3 mit einer Türblattbreite t des Türblatts 7 identisch, so dass in der Figur 1 bei der vorliegenden Ansicht bzw. Projektion das Koppelglied G3 mit dem Türblatt 7 nicht unterscheidbar ist und die Kinematik des Koppelglieds G3 mit der Kinematik des Türblatts 7 übereinstimmt. Grundsätzlich müssen Türblattbreite t und Länge des Koppelglieds G3 nicht zwingend identisch sein.

Sowohl das Koppelglied G3 als auch das Getriebeglied G2 weisen auf ihren Gliederabschnitten zwei Drehgelenke D3, D6 auf.

An diesen Drehgelenken D3, D6 sind drehbare Getriebeglieder G5 und G4 verknüpft, deren von den Drehgelenken D3, D6 abgewandten Enden miteinander durch ein Doppeldrehgelenk D5 drehbar verbunden sind. Mit dem Doppeldrehgelenk D5 drehbar verbunden ist ferner ein Getriebeglied G6 das, wiederum mit dem Gestell G1 über das Drehgelenk D2 verbunden ist. Die Längenverhältnisse und die Positionen der Drehgelenke auf den jeweiligen Gelenken sind nicht beliebig, sondern gehorchen bestimmten Längenverhältnissen, so dass die Bewegung des Koppelglieds G3 erfolgen kann.

Die Positionen der Drehgelenke D1, D2, D3, D4, D5, D6 und Längenverhältnisse können dabei der Figur entnommen werden. Zur besseren Reproduzierbarkeit werden diese Längenverhältnisse auch numerisch angegeben, wobei zur Dokumentierung dieser Längenverhältnisse die Abstände zwischen zwei Drehgelenken DX und DY als d (DX, DY) bezeichnet. Bei Normierung des kürzesten Abstandes, das ist der Abstand zwischen Drehgelenk D1 und Drehgelenk D3, d. h. d (D1, D3) = 1, folgen entsprechend: d (D1, D4) = 2, 968; d (D1, D2) = 3,125; d (D4, D6) = 2,656; d (D3, D5) = 2,031; d (D5, D2) = 2,25; d (D5, D6) = 1,387.

Das gesamte Kurbelgetriebe 10 lässt sich beispielsweise über das Getriebeglied G2 antreiben. Die Position der Getriebeglieder ist über eine Variable bestimmt, beispielsweise den in der Figur mit α indizierten Drehwinkel. Zu jedem festen Winkelwert des Getriebegliedes G2 sind somit alle Positionen bzw. Orientierungen der anderen Getriebeglieder G1, G3, G4, G5, G6 eindeutig bestimmt, wobei insbesondere die Position und Orientierung des Koppelglieds G3, also des Türblatts 7 eindeutig daraus hervorgeht.

Der Drehwinkel α des Getriebegliedes G2 bezogen auf das Gestell G1 wird vorteilhaft auf Werte von 0°≤α≤180°beschränkt, wobei α = 0° den geschlossenen Zustand der Drehtür 6 bezeichnet. Dann ist das Türblatt 7 parallel zum Gestell G1 ausgerichtet und deckt die Kabinenöffnung 5 entsprechend ab. Aufnahmeglieder 45 an Koppelglied G3 und an Kabinenwand 3 erzeugen ein Einrasten des Koppelgliedes G3 bei α = 0°. Hierfür kann ferner ein Schließmechanismus mit Fanghaken bereitgestellt werden.

Der geöffnete Zustand entspricht α=180°. Die Führungsbahnen 18, 19 des Türblatts 7 bei sukzessivem Durchlaufen der erlaubten Drehwinkel (0°≤α≤180°) des Getriebegliedes G2 sind in Figur 1 schematisch dargestellt. Dabei beschreibt die äußere Führungsbahn 19 die Positionen des Drehgelenks D4 und damit einer ersten Seite des Türblatts 7. Näherungsweise entspricht dabei die äußere Führungsbahn 19 einem Halbkreis. Dabei ist eine Auskragung der äußeren Führungsbahn etwa halb so groß wie die Türblattbreite t. Dies ist also vorteilhaft deutlich geringer als bei einer Drehtür des Standes der Technik, deren Auskragung der Türblattbreite t entspricht, was in den folgenden Figuren im Vergleich zum Stand der Technik näher behandelt wird.

Die schematische Darstellung der inneren Führungsbahn 18 beschreibt die Positionen der zum Drehgelenk D4 abgewandten freien Seite des Türblatts 7. Die innere Führungsbahn 18 ist dabei nur näherungsweise eine Gerade. Die innere Führungsbahn 18 nähert sich dabei der zur Kabinenwand angeordneten Seitenwand 4 an. Je geringer diese Abstände werden, desto weniger Raum im Inneren der Kabine 1 wird durch die Kinematik des Türblatts 7 eingenommen. Es ist daher besonders vorteilhaft, wenn die Kabinenöffnung 5 sich am Übergang von Kabinenwand 3 und einer zugeordneten Seitenwand 4 befindet, so dass eine wandnahe innere Führungsbahn 18 wie beispielhaft in Figur 1 gezeigt realisiert werden kann, so dass ein Fahrgast im Inneren der Kabine 1 möglichst viel Platz zur Verfügung hat.

An der vom Drehgelenk D4 abgewandten Seite des Türblatts 7 befindet sich eine Türdichtung 30. Diese ist dafür geeignet, das Innere der Kabine 1 blickdicht abzudecken, falls im geschlossenen Zustand unerwünschte Spalte entstehen, beispielsweise am Übergang von Kabinenwand 3 und Seitenwand 4.

Ferner kann vorteilhaft die finale Position des Türblatts 7, also bei α=180°, nicht parallel zur Seitenwand 4 ausgerichtet sein, so dass das Türblatt 7 etwas von der Seitenwand 4 absteht. Dadurch entsteht im geöffneten Zustand ein Spalt, der als Quetschschutz 32 vorteilhaft agiert. Eine umgreifende Hand zum Schließen oder Öffnen der Drehtür 6 wird somit vorteilhaft nicht eingeklemmt, wodurch die Sicherheit im Umgang mit der Drehtür 6 erhöht wird bzw. das Verletzungsrisiko minimiert wird.

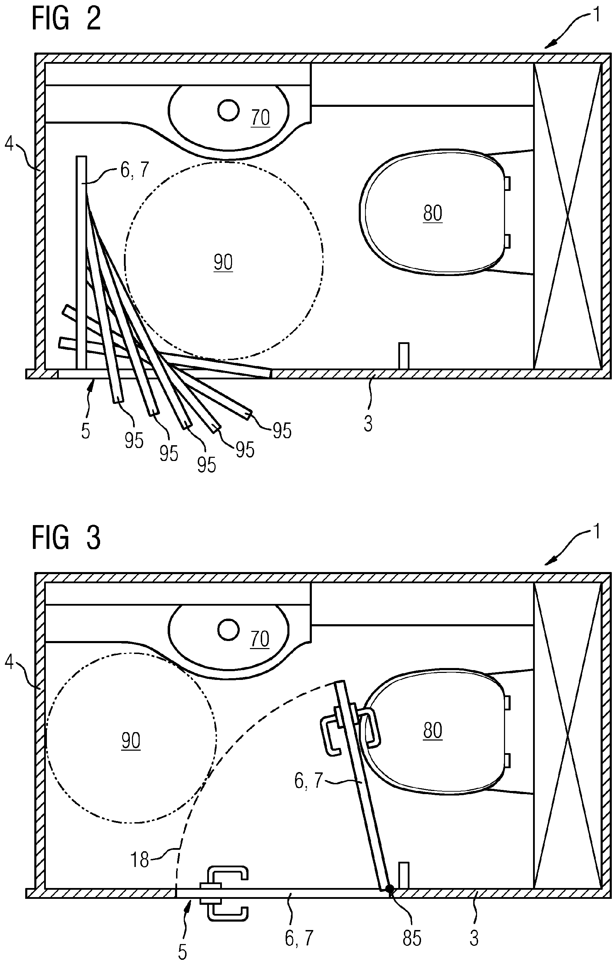

In den Figuren 2-5 wird die vorteilhafte Kinematik beim Schließen bzw. Öffnen der erfindungsgemäßen Drehtür 6 gegenüber einer Drehtür des Standes der Technik demonstriert.

In der Figur 2 ist eine erfindungsgemäße Kabine 1 in Draufsicht dargestellt zur Visualisierung der Kinematik der Drehtür beim Öffnen bzw. Schließen. Beispielhaft sind innerhalb der Kabine 1 weitere Nutzelemente eingebracht, hier ein Waschtisch 70 sowie ein WC-Sitz 80, die durch ihre Positionen vorgegebene Randbedingungen für die Optimierung einer Ausgestaltung eines Drehtürmechanismus definieren.

Die Kabine 1 umfasst eine gerade Kabinenwand 3 mit einer dort befindlichen Kabinenöffnung 5. Ferner umfasst die Kabine 1 eine Drehtür 6 mit einem Türblatt 7, deren Positionen einschließlich des geöffneten Zustands und des geschlossenen Zustands mittels einer Lagenschar 95 dargestellt ist, so dass die Führungsbahn 18, 19 der Drehtür 6 anhand der Lagen nachvollzogen werden kann. Die Lagen des Türblatts 7 entsprechen der in Figur 1 beschriebenen Führungsbahn 18, 19. Im geschlossenen Zustand deckt die Drehtür 6 die Kabinenöffnung 5 ab, während im geöffneten Zustand die Kabine 1 durch die Kabinenöffnung 5 begehbar ist. In diesem Zustand befindet sich die Drehtür 6 vollständig innerhalb der Kabine 1 und versperrt somit nicht den Gang.

Das Kurbelgetriebe (hier nicht eingezeichnet) ist dabei derart eingerichtet, dass die Führungsbahn der Drehtür 6 in Richtung einer Seitenwand 4 erfolgt und nicht in den mittigen Bereich der Kabine 1. Zudem ist die Kabinenöffnung 5 im Übergang von Kabinenwand 3 und einer zugeordneten Seitenwand 4 positioniert. Dadurch verläuft die Führungsbahn bzw. die Lagenschar 95 des Türblatts 7 vorteilhaft mit kurzem Abstand zur Seitenwand 4.

Zur Charakterisierung des für einen Fahrgast innerhalb der Kabine 1 zur Verfügung stehenden Raumbereichs wird beispielhaft eine Kreisfläche mit einem Wendekreis 90 eingezeichnet, die sich zwischen der Anordnung des Waschtischs 70 und des WC-Sitzes 80 sowie der vom Türblatt 7 überstrichenen Fläche ergibt. Dieser Wendekreis 90 ist durch die erfindungsgemäße Kabine 1 mit Drehtür 6 und Kurbelgetriebe 10 besonders groß, was im folgenden Vergleich mit einer Drehtür des Standes der Technik deutlich wird.

In der Figur 3 ist zum Vergleich eine Kabine 1 mit einer Drehtür 6 des Standes de Technik dargestellt. Die Positionierungen der weiteren Nutzelemente, also des Waschtischs 70 bzw. des WC-Sitzes 80 sind dabei identisch zu Figur 2 ausgeführt.

Die Drehtür 6 des Standes der Technik umfasst ein Türblatt 7 und öffnet bzw. schließt durch Rotation um einen festen Drehpunkt 85. Somit entspricht die überstrichene Fläche einem Kreisausschnitt. Der entsprechende Wendekreis 90, der einem Fahrgast im Inneren der Kabine 1 zur Verfügung steht, ist im Vergleich zum Wendekreis 90 der erfindungsgemäßen Kabine 1 deutlich kleiner und von der Lage her deutlich ungünstiger. Dadurch wird der Vorteil der erfindungsgemäßen Kabine 1 mit Drehtür 6 deutlich gemacht.

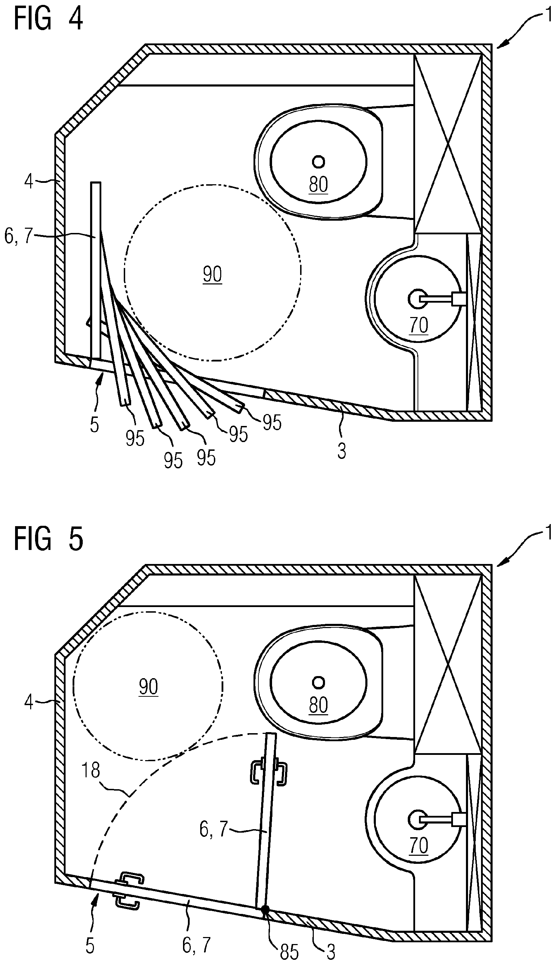

Figur 4 und Figur 5 stellen analog zu Figur 2 und 3 einen Vergleich der erfindungsgemäßen Kabine 1 mit einer Kabine des Standes der Technik dar. In diesen Ausführungsformen sind die weiteren Nutzelemente wie Waschtisch 70 sowie ein WC-Sitz 80 an unterschiedlichen Positionen im Vergleich zu Figur 2 und Figur 3 lokalisiert. Die Lagenschar 95 der erfindungsgemäßen Drehtür 6 in Figur 4 ist dabei analog zu der Lagenschar 95 in Figur 2.

Der sich aus der Öffnungs- oder Schließbewegung der Drehtür 6 ergebende Wendekreis im Inneren der Kabine 1 in Figur 4 ist entsprechend groß im Vergleich zum sich ergebenen Wendekreis 90 in der Kabine 1 des Standes der Technik, siehe dazu die entsprechende Kabine des Standes der Technik in Figur 5 bei gleicher Anordnung der Nutzelemente, aber gleicher Drehtür 6 des Standes der Technik wie in Figur 3 beschrieben. Vorteilhaft ergibt sich zudem, dass der Wendekreis 90 sich gemäß Figur 4 zentral in der Kabine 1 befindet, während bei der Kabine des Standes der Technik, also beispielsweise bei Figur 5, dieser Wendekreis sich am Rand der Kabine 1 befindet. Für den Fahrgast ergibt sich durch die erfindungsgemäße Kabine 1 somit ein höherer Komfort beim Öffnen oder Schließen der Drehtür, da er nicht wie beim Stand der Technik in der Kabine stark ausweichen muss.

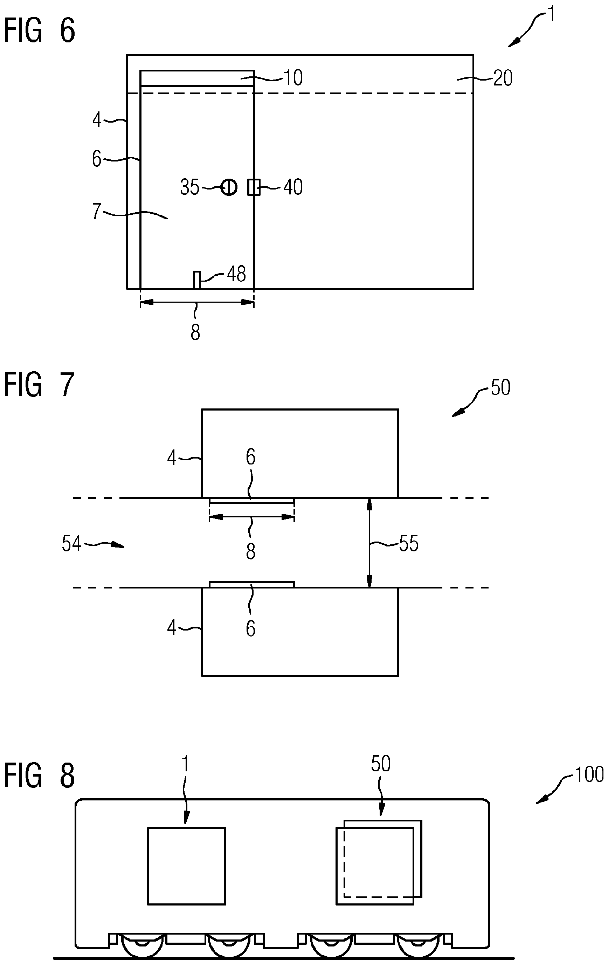

In Figur 6 ist eine erfindungsgemäße Kabine 1 in Seitenansicht gezeigt. Die Kabine 1 umfasst wie in den vorigen Figuren eine Drehtür 6 mit einem Türblatt 7 und ist im geschlossenen Zustand dargestellt. Die Kabinenöffnung (nicht eingezeichnet) wird also entsprechend von dem Türblatt 6 abgedeckt und ist im Übergang zu einer Seitenwand 4 lokalisiert. In einem oberen Teil der Kabine 1 befindet sich ein Deckenbereich 20. In diesem Deckenbereich 20 ist vorteilhaft das Kurbelgetriebe 10 untergebracht, so dass die Getriebeglieder G1, G2, G3, G4, G5, G6 beim Öffnen oder Schließen die Fahrgäste nicht beeinträchtigen.

Die Drehtür 6 umfasst ferner einen Türgriff 35 zur manuellen Betätigung sowie einen Fanghaken 40 für den Schließmechanismus. Die Drehung der Tür kann alternativ auch automatisch erfolgen. Die Türblattbreite t weist bevorzugt eine Breite von weniger als 1 m auf, noch bevorzugter weniger als 80 cm und besonders bevorzugt 50 cm. Zur besseren Stabilität wird das Türblatt 7 an einem unteren Ende an einem Führungspunkt 48 geführt.

In Figur 7 wird eine erfindungsgemäße Kabinenanordnung 50 gezeigt. Dabei sind die Kabinen 1 gegenüber, also vis-à-vis, angeordnet, wobei die Kabinen 1 durch einen Gang 54 voneinander getrennt sind. Der Gang 54 weist eine Gangbreite g auf. Die Gangbreite g ist dabei gleich groß bzw. in etwa gleich groß wie die Türblattbreite t des Türblatts 7. Bei dieser Gangbreite g können vorteilhaft die erfindungsgemäßen Kabinen 1 verwendet werden, da deren Drehtüren 6 bei Öffnen bzw. Schließen einen auskragenden Bogen aufweisen mit etwa der halben Türblattbreite t. Dadurch behindern sich diese Drehtüren 6 nicht und können simultan von Fahrgästen geöffnet bzw. geschlossen werden. Für Türblattbreiten t von beispielsweise 50 cm können somit Gangbreiten von 50 cm oder natürlich auch mehr realisiert werden.

Figur 8 zeigt ein Fahrzeug 100, bevorzugt ein Schienenfahrzeug, mit beispielhaft einer erfindungsgemäßen Kabine 1 und einer Kabinenanordnung 50. Alternativ können aber auch beliebig viele Kabinen 1 und/oder Kabinenanordnungen 50 im Fahrzeug 100 eingebracht sein.

Zusammengefasst bietet die erfindungsgemäße Kabine 1 eine optimierte Ausnutzung der zur Verfügung gestellten Räumlichkeiten durch das die Drehtür 6 führende Kurbelgetriebe 10. Dadurch kann sowohl die zur Nutzung zur Verfügung stehende Fläche erweitert werden als such der Komfort bei der Benutzung gesteigert werden.

## Patentansprüche

1. Eine Kabine (1) mit Drehtür (6) für ein Fahrzeug (100) umfassend:
- eine Kabinenwand (3) mit einer Kabinenöffnung (5);
- eine Drehtür (6) mit einem Türblatt (7), das zwischen einem geschlossenen Zustand und einem geöffneten Zustand schwenkbar ist;
**dadurch gekennzeichnet, dass** sie
- ein Kurbelgetriebe (10) umfasst, das mit der Kabine (1) und dem Türblatt (7) verbunden ist, das das Türblatt (7) auf gekrümmten Führungsbahnen (18, 19) zwischen dem geöffneten und dem geschlossen Zustand unter Krafteinwirkung führt, wobei im geschlossenen Zustand das Türblatt (7) die Kabinenöffnung (5) abdeckt, wobei das Kurbelgetriebe (10) sechsgliedrig ist.

2. Eine Kabine (1) nach Anspruch 1, wobei das Kurbelgetriebe (10) ein Watt-l-Kurbelgetriebe ist, wobei ein Koppelglied (G3) des Watt-l-Kurbelgetriebes durch das Türblatt (7) dargestellt wird.

3. Eine Kabine (1) nach einem der vorherigen Ansprüche, wobei das Türblatt (7) an einem unteren Ende an einem Führungspunkt (48) geführt wird.

4. Eine Kabine (1) nach einem der vorherigen Ansprüche, wobei das Kurbelgetriebe (10) und die zugehörigen Getriebeglieder (G1, G2, G3, G4, G5, G6) in einem Deckenbereich (20) untergebracht sind.

5. Eine Kabine (1) nach einem der vorherigen Ansprüche, wobei sich die Kabinenöffnung (5) der Kabinenwand (3) an einem Übergang von Kabinenwand (3) und einer der Kabinenwand (3) zugeordneten Seitenwand (4) befindet, wobei das Kurbelgetriebe (10) mit Türblatt (7) derart eingerichtet ist, dass die Drehbewegung des Türblatts (7) in Richtung der Seitenwand (4) erfolgt.

6. Eine Kabine (1) nach einem der vorherigen Ansprüche, wobei im geöffneten Zustand ein Quetschschutz (32) zwischen Türblatt (7) und Seitenwand (4) vorliegt.

7. Eine Kabinenanordnung (50) mit zwei gegenüberliegenden Kabinen (1) gemäß einem der vorherigen Ansprüche, wobei die Kabinenöffnungen (5) durch einen zwischen den Kabinen befindlichen Gang (54) voneinander getrennt sind.

8. Eine Kabinenanordnung (50) gemäß Anspruch 7, wobei die Gangbreite (g) größer oder gleich der Türblattbreite (t) des Türblatts (7) ist.

9. Ein Fahrzeug (100) umfassend mindestens eine Kabine (1) nach einem der Ansprüche 1 bis 8 und/oder umfassend mindestens eine Kabinenanordnung (50) nach einem der Ansprüche 7 bis 8.

## Claims

1. Cabin (1) with a swivel door (6) for a vehicle (100), comprising:
- a cabin wall (3) with a cabin opening (5);
- a swivel door (6) with a door leaf (7) which can be pivoted between a closed state and an open state;
**characterized in that** said swivel door
- comprises a crank mechanism (10) which is connected to the cabin (1) and to the door leaf (7) and guides the door leaf (7) on curved guide tracks (18, 19) between the open and the closed state under the action of force, wherein, in the closed state, the door leaf (7) covers the cabin opening (5), wherein the crank mechanism (10) has six members.

2. Cabin (1) according to Claim 1, wherein the crank mechanism (10) is a Watt I crank mechanism, wherein one coupling member (G3) of the Watt I crank mechanism is represented by the door leaf (7).

3. Cabin (1) according to either of the preceding claims, wherein the door leaf (7), at a bottom end, is guided on a guide point (48).

4. Cabin (1) according to one of the preceding claims, wherein the crank mechanism (10) and the associated mechanism members (G1, G2, G3, G4, G5, G6) are accommodated in a ceiling region (20) .

5. Cabin (1) according to one of the preceding claims, wherein the cabin opening (5) of the cabin wall (3) is located at a transition from the cabin wall (3) to a side wall (4) assigned to the cabin wall (3), wherein the crank mechanism (10) with the door leaf (7) is configured in such a manner that the rotational movement of the door leaf (7) takes place in the direction of the side wall (4).

6. Cabin (1) according to one of the preceding claims, wherein, in the open state, an anti-pinch device (32) is present between the door leaf (7) and the side wall (4).

7. Cabin arrangement (50) with two mutually opposite cabins (1) according to one of the preceding claims, wherein the cabin openings (5) are separated from one another by a corridor (54) located between the cabins.

8. Cabin arrangement (50) according to Claim 7, wherein the corridor width (g) is greater than or equal to the door-leaf width (t) of the door leaf (7).

9. Vehicle (100) comprising at least one cabin (1) according to one of Claims 1 to 8 and/or comprising at least one cabin arrangement (50) according to either of Claims 7 to 8.

## Revendications

1. Cabine (1) à porte (6) pivotante d'un véhicule (100), comprenant
- une paroi (3) de cabine ayant une ouverture (5) de cabine ;
- une porte (6) pivotante ayant un ventail (7), qui peut pivoter entre un état fermé et un état ouvert ;
**caractérisée en ce qu'**elle
- comprend un mécanisme (10) à manivelle, qui est relié à la cabine (1 ) et au ventail (7) de la porte et qui guide, sous l'effet d'une force, le ventail (7) de la porte sur des voies (18, 19) de guidage incurvées entre l'état ouvert et l'état fermé, dans laquelle, dans l'état fermé, le ventail (7) de la porte recouvre l'ouverture (5) de la cabine, le mécanisme (10) à manivelle étant à six éléments.

2. Cabine (1) suivant la revendication 1, dans lequel le mécanisme (10) à manivelle est un mécanisme à manivelle Watt-1, un élément (G3) d'accouplement du mécanisme à manivelle Watt-1 étant représenté par le ventail (7) de la porte.

3. Cabine (1) suivant l'une des revendications précédentes, dans lequel le ventail (7) de la porte est guidé à une extrémité inférieure, en un point (48) de guidage.

4. Cabine (1) suivant l'une des revendications précédentes, dans lequel le mécanisme (10) à manivelle et les éléments (G1, G2, G3, G4, G5, G6) associés du mécanisme sont logés dans une partie (20) de plafond.

5. Cabine (1 ) suivant l'une des revendications précédentes, dans laquelle l'ouverture (5) de la paroi (3) de la cabine se trouve à une transition de la paroi (3) de la cabine et d'une paroi (4) latérale associée à la paroi (3) de la cabine, le mécanisme (10) à manivelle étant conçu avec le ventail (7) de porte, de manière à ce que le mouvement de pivotement du ventail (7) de la porte s'effectue dans la direction de la paroi (4) latérale.

6. Cabine (1 ) suivant l'une des revendications précédentes, dans laquelle, dans l'état ouvert, il y a une protection (32) à l'écrasement entre le ventail (7) de la porte et la paroi (4) latérale.

7. Agencement (50) de cabine, comprenant deux cabines (1) opposées suivant l'une des revendications précédentes, les ouvertures (5) de cabine étant séparées l'une de l'autre par un couloir (54) se trouvant entre les cabines.

8. Agencement (50) de cabine suivant la revendication 7, dans lequel la largeur (g) du couloir est supérieure ou égale à la largeur (t) du ventail (7) de la porte.

9. Véhicule (100), comprenant au moins une cabine (1) suivant l'une des revendications 1 à 8 et/ou comprenant au moins un agencement (50) de cabine suivant l'une des revendications 7 à 8.
